# EUROPEAN PATENT SPECIFICATION

(11) **EP 1 284 100 B1**
(45) Date of publication and mention of the grant of the patent: **24.03.2004**
(21) Application number: 02425502.8
(22) Date of filing: 31.07.2002
(51) Int. Cl.: A22C 25/17

(54) **An automatic skinner for smoothskinned seafood.**
Enthäutungsmaschine für Fische mit einer weichen Haut
Machine à dépouiller les poissons avec une peau tendre

(30) Priority: 07.08.2001 IT AN20010036
(43) Date of publication of application: 19.02.2003
(73) Proprietor: Meta Meccanica S.r.l., 63038 Ripatransone (AP) (IT)
(72) Inventor: Pennesi Marco, 63013 Grottammare (IT)
(74) Representative: Lanzoni, Luciano

(56) References cited:
- EP-A- 0 424 323
- US-A- 4 285 099
- US-A- 5 288 264
- US-A- 5 399 118
- US-A- 5 779 531

## Description

The present invention relates to the processing of fish products, that is to say, the skinning of smooth-skinned seafood such as squid, cuttlefish, octopus, calamari, etc., and in particular it relates to an automatic skinner.

In the industrial processing of smooth-skinned seafood, the seafood is skinned by sequentially feeding it as it rotates about its longitudinal axis, with the sideways thrust of the seafood against a fixed blade, angled in such a way that it intersects with the edge of the seafood and removes the skin as the seafood rotates.

In the past, such operations were partly performed manually, using apparatus with a skinning station equipped with a motor-driven rotary skinning roller, a fixed blade and a table for seafood infeed, on both sides of the skinning roller. An operator manually supplied the skinning station by placing seafood on the infeed table, then manually accompanying it onto the side surface of the skinning roller. The seafood, thrust against the roller's rotating blade and rotated by the movement of the roller, was skinned, then was fed by pushing manually towards a collection station, whilst the skins followed a different path and, in turn, reached a separate collection station.

Skinning was completely automated by a machine described in document IT 01238366, which differed from previous machines mainly due to the presence of a structural frame which could be angled two ways, and a side seafood pusher located above the blade and activated by a mechanism in such a way as to apply an intermittent thrust, transversal to the axis of the skinning roller, to the seafood passing through the skinning station.

The frame is simultaneously angled in two directions, set at right angles to one another, which substantially pass through two perpendicular sides of a rectangle defining the polygon formed by the machine feet resting on the floor.

If, during skinning, the seafood is fed through the machine in a direction parallel to the axis of rotation of the skinning roller, the angle of the machine frame about an axis transversal to the longitudinal direction causes the seafood to slide forwards under its own weight, meaning it they no longer needs to be pushed manually. The simultaneous angle of the frame about the longitudinal axis sets the seafood infeed table at an angle, allowing the seafood to be fed to the skinning roller by the action of gravity and to spontaneously remain in contact with the blade for the entire skin removal step.

Meanwhile, thanks to crank mechanisms, the pusher, which is attached to and rotates around a fixed point, oscillates at an angle about said position, rhythmically pushing the seafood then pulling away from it to prevent jamming in the skinning station. The double angle of the frame (necessary if the machine is to perform its two functions of seafood feed and thrust against the blade), causes the machine to skew relative to the horizontal plane, while the oscillating motion of the pushers in this type of skinner causes considerable structural instability which is directly proportional to the angles set.

At the same time, the skinner is subject to quite intense vibrations, promoted not just by the presence of mobile masses with alternating motion, but exacerbated by the particular skew angle of the frame, inside which the alternating masses have to operate.

The machine's instability on one hand and operating vibrations on the other have a negative effect on the safety of the working environment. The excessive noise created pollutes a working environment where personnel are also obliged to stand in the machine operating area for long periods. There are also negative effects for processing quality since the mechanical vibrations interfere with the regularity of the skinning.

The search for the best frame angling conditions, the most suitable machine operating speeds, and the conditions designed to ensure that the level of vibrations produced is acceptable with relation to the need for an appropriate hourly production rate and a minimum amount of reject products, is the result of complex compromises concerning the greater or lesser extent of each of the two angles which, during machine operation, are reached by trial and error on each occasion, not always being simple or rapid.

To limit the afore-mentioned disadvantages, subsequent improvements were proposed - described in document IT 00225753 - chiefly consisting in eliminating the entire oscillating pusher unit and the relative actuator crank mechanisms, substituting them with a roller which rotates in one direction only, motor-driven by means of a chain and a driving pinion, the outside of the roller having a plurality of projections.

By connecting a continuously rotating roller to the frame which is angled in two directions, in place of the mobile masses with alternating motion, the skinner is improved in terms of the level of vibrations produced, but it still has further disadvantages of a different type.

The purely rotary movement of the roller, that is to say, the total absence of even minimal thrust acting on the seafood in the direction transversal to its direction of feed along the skinner, by removing a fundamental step in the skinning cycle, no longer prevents the machine, without operator supervision, from jamming and so compromising regular operation and not allowing reject products to be minimised.

The possible use on the roller of projections with a spiral profile to activate product forward thrust is not only completely unable to modify the cause of the missing transversal thrust which lies behind the disadvantage, but also makes it worse, since it mechanically forces any seafood behind a jammed area right into it.

The absence of mobility of such a roller - which replaces the pusher - in the direction transversal to the axis of the skinning roller, also brings a further limitation of having to process seafood which must be, as far as possible, all the same size and, therefore, requires preliminary seafood size selection upstream of the skinning process.

When skinning seafood of different sizes, the smallest seafood with a nominal size tends to easily become jammed between the blade and the roller above it, whilst larger seafood tends to be positioned further from the blade, sometimes so far away that correct skinning cannot be guaranteed.

The aim of the present invention is to overcome the above-mentioned disadvantages by providing a skinner able to operate automatically in a reliable, safe way, even with significant variations in the sizes of seafood processed and even at production speeds considerably higher than those of known machines for similar uses.

Accordingly, the present invention fulfils the preset aim by providing an automatic skinner for smooth-skinned seafood of the type comprising a structural frame which supports a skinning roller which turns about its longitudinal axis, designed to receive the seafood to be skinned on its side edge surface. The machine also comprises a blade which can be angled in such a way that its cutting edge is directed towards the seafood supported by the skinning roller. The frame is attached to feed means which feed the seafood longitudinally to the skinning roller and is also attached to actuator means which move the seafood transversally to the skinning roller, as it is fed along the skinning roller. The skinner is characterised in that the skinning roller and feed means are integrated with one another and the frame is designed to angle the skinning roller in such a way that its longitudinal axis is constrained to constantly remain in a single, predetermined vertical plane which does not vary with the various possible machine configurations used.

If the actuator means comprise a mobile pusher with alternating straight motion transversal to the axis of the skinning roller, once the pusher minimum height dimension has been set relative to the cutter blade below, the constant maintenance of this dimension at any point of its trajectory makes the machine indifferent to any variations in the size of the seafood to be skinned, which can gradually be fed along the skinning roller.

The use of a skinning roller with spiral cutting teeth allows a more regular and progressive cut, as well as allowing regular seafood feed longitudinally to the axis of skinning even with the roller at a minimum angle to the horizontal plane, or with a perfectly horizontal skinning roller longitudinal axis.

The use of a pusher in the shape of a rotary roller, supported so that it is offset above the blade, and height-adjustable by means of height adjusting means, not only allows the skinner to be set up for the most varied operating conditions with a rapid set-up and precision adjustments, but also allows the seafood to be pressed against the side surface of the skinning roller to a given degree (also adjustable).

This means that the best conditions can always be set up on the machine for correct rotary seafood feed irrespective of the amount of water present and/or of the consistency of the seafood bodies.

By equipping the skinner with a seafood infeed section at one end of the skinning roller, designed to release the seafood directly onto the skinning roller, the skinner has the further advantage of being able to subject all of the seafood to feed paths which basically have the same length. This guarantees on one hand regular feed even at high feed speeds, and on the other hand homogeneous treatment for all seafood processed by the skinner. The technical features of the present invention, in accordance with the above-mentioned aims, are set out in the claims herein and the advantages more clearly illustrated in the detailed description which follows, with reference to the accompanying drawings, which illustrate a preferred embodiment of the invention without limiting the scope of the inventive concept, and in which
- Figures 1 and 2 are respectively a front and side elevation assembly view of a skinner made in accordance with the present invention;
- Figure 3 is an enlarged view of a detail of the skinner illustrated in Figures 1 and 2;
- Figure 4 is a rear view of the skinner, with some parts cut away to better illustrate others;
- Figure 5 is a side view of a preferred embodiment of a skinning roller;
- Figure 6 is a greatly enlarged cross-section of the skinning roller illustrated in Figure 5;
- Figures 7 and 8 illustrate two alternative embodiments of the skinner made in accordance with the present invention.

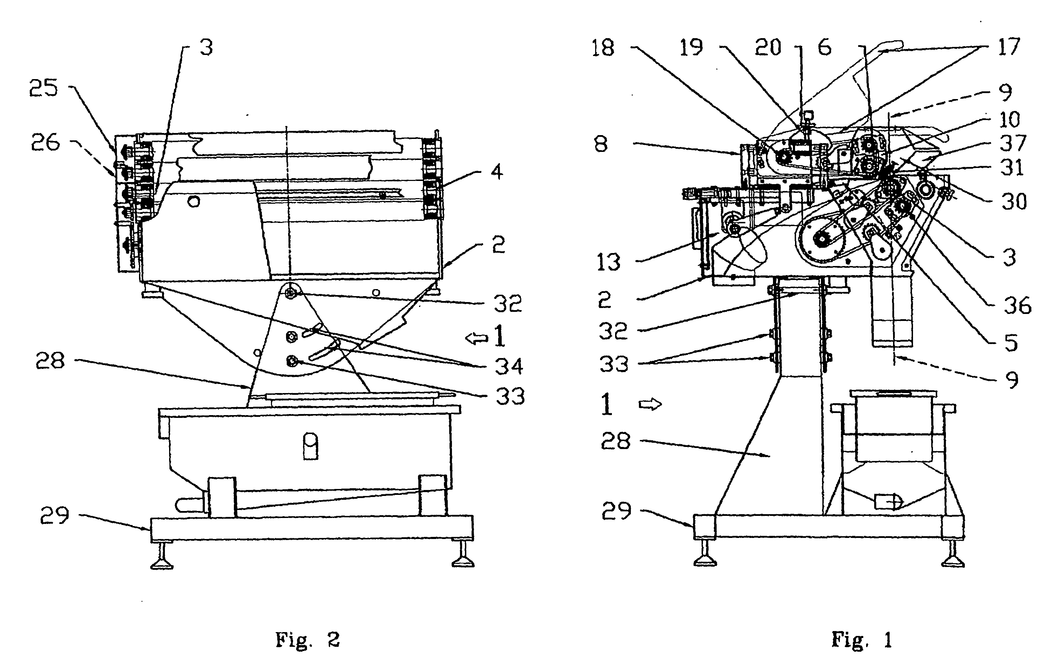

With reference to Figure 1 in the accompanying drawings, the numeral 1 denotes as a whole an automatic skinner for skinning smooth-skinned seafood 31, such as squid, cuttlefish, octopus, calamari, etc.

The skinner 1 basically comprises (Figure 1) an operating section 30 attached to a structural frame 2, in turn supported by an upright structure 28 positioned above a support base 29. The structural frame 2 is hinged to the upright structure 28 below by a horizontal pin 32. A system of pins 33 and slots 34, below the hinge pin 32, allows the structural frame 2 to be set and kept in the desired operating condition, that is to say, allows the frame 2 to be kept horizontal or, vice versa, to be angled forward or backward, in any event remaining within one degree of freedom of movement as regards only rotation of the frame 2 in a vertical plane.

The operating section 30 comprises a skinning roller 3 with contiguous and parallel counter-roller 36, a blade 5 positioned at the side of the skinning roller 3, feed means 7 which feed the seafood 31 longitudinally to the skinning roller 3 and actuator means 8 which move the seafood 31 transversally to the skinning roller 3 as the seafood is fed along the skinning roller 3.

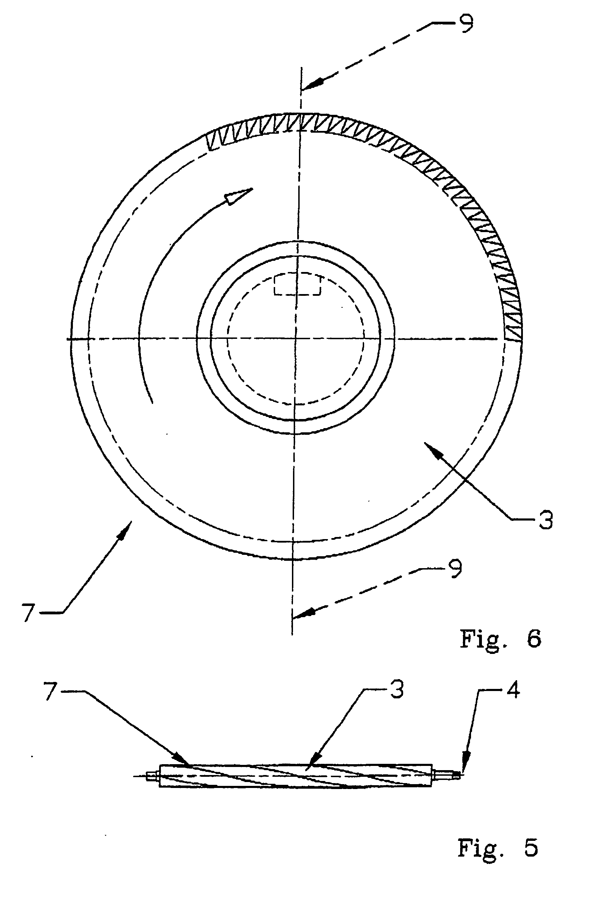

The skinning roller 3, motor-driven about its longitudinal axis 4, has spiral projections 7 on its side surface (Figures 5 and 6). The skinning roller 3 receives the seafood 31 to be skinned on its side edge surface and, thanks to its rotation and the shape of the surface projections 7, draws the seafood in a rotary motion, bringing it into contact with a blade 5 cutting edge 6 opposite. The blade 5 lies and is angled and positioned in such a way that it extends towards the skinning roller 3 and cuts the seafood 31 skin, gradually detaching it from around the seafood and finally removing it completely.

The spiral projections 7, also constituting a preferred embodiment of feed means integrated with the skinning roller 3, simultaneously feed the seafood 31 in a direction of movement parallel to the longitudinal axis 4 of the skinning roller 3.

Due to the joint between the structural frame 2 and the upright structure 28 below, the skinning roller 3 can, therefore, be angled in such a way that its longitudinal axis 4 is constrained to constantly remain on a single, predetermined vertical plane 9 which does not vary, whatever the selected configuration of the structural frame 2 used during skinner 1 operation.

The actuator means, labelled 8 as a whole, comprise a seafood 31 pusher 10 located at the side of the seafood, which is mobile, with alternating straight motion, along its trajectory transversal to the skinning roller 3.

The pusher 10 comprises a first roller 22, parallel to the skinning roller 3, motor-driven about its axis of rotation, which is integrated with a second roller 23, contiguous and parallel to the first. Each roller 22, 23 has projections extending from its edge towards the seafood 31 supported by the skinning roller 3.

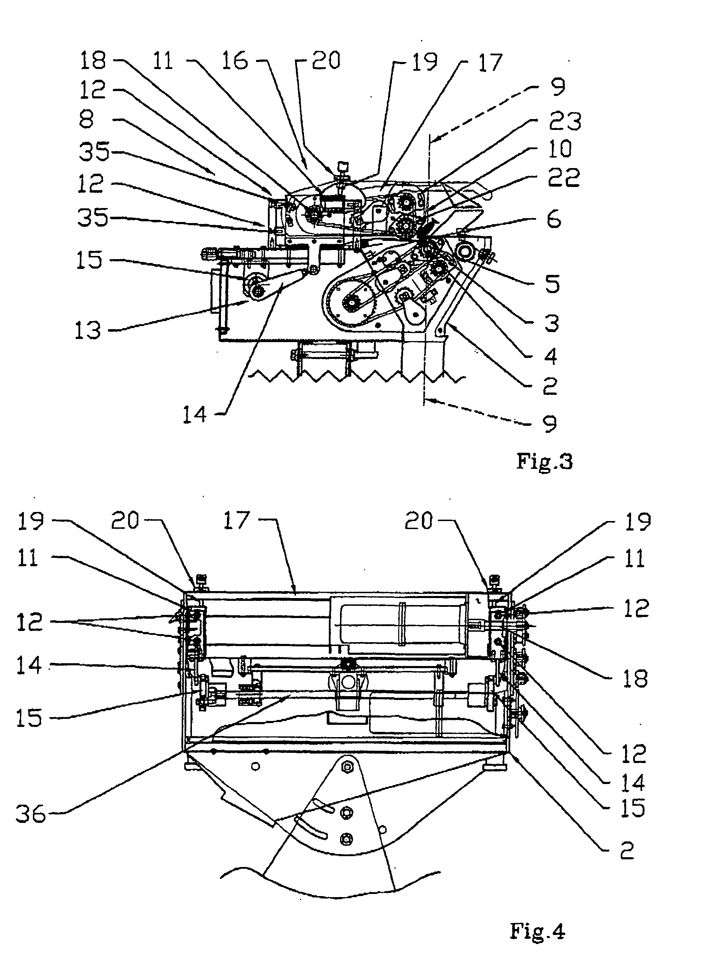

To give the pusher 10 its characteristic alternating, straight motion, the actuator means 8 comprise a shoe 11 which supports the pusher 10 as a whole and which - as illustrated in Figure 4 - basically extends along the entire length of the skinner 1, parallel to the direction in which the axis 4 of the skinning roller 3 extends.

The shoe 11 is supported at its ends by two straight guides 12, in turn transversal to the axis 4 of the skinning roller 3, and consisting of pairs of parallel and horizontal rods 35, supported by the structural frame 2 of the skinner 1. A pair of connecting rod and crank 14, 15 mechanisms 13, attached to the shoe 11 close to the two guides 12 and motor-driven as a unit by a shared shaft 36, allow the pusher 10 to be motor-driven, moving it alternately and parallel to itself towards the axis 4 of the skinning roller 3.

The shoe 11 (Figure 3) supports the pusher 10 in such a way that it is offset towards the skinning roller 3 by means of a casing 17 joined to and rotating about an axis of rotation 18 parallel to the axis 4 of rotation of the skinning roller 3. Adjusting means 16 interacting between the shoe 11 and casing 17 which include, in particular, two screw and nut mechanisms 19, 20 interacting between the casing 17 and the guides 12, then adjust the pusher 10 height setting relative to the skinning roller 3 or the blade 5 below it.

Without altering the above-mentioned concept of pusher 10 mobility, the form of the pusher 10 may vary in many other ways. Some are described below by way of example and without limiting the scope of application of the invention.

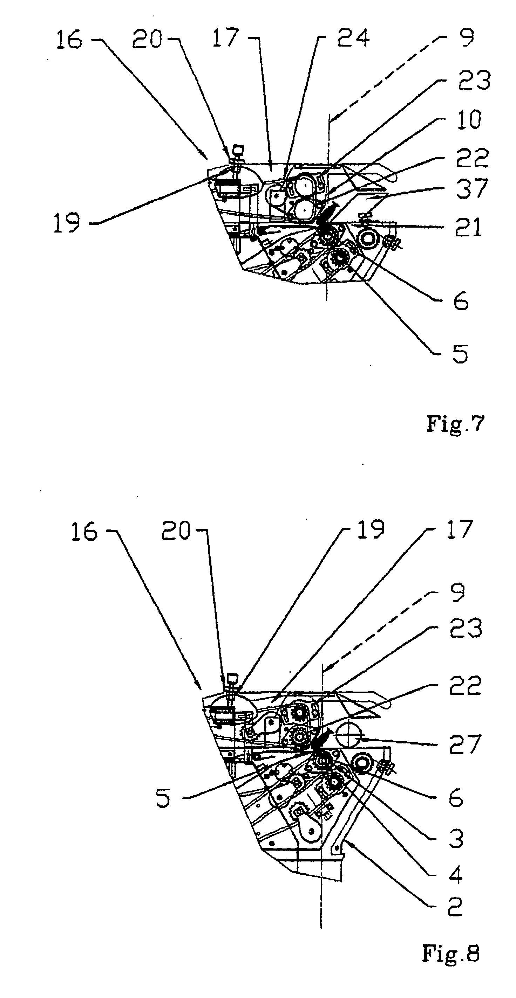

Figure 7 shows an alternative embodiment of the pusher 10, with a wall 21 for contact with the side of the seafood 31 travelling through the skinner 1, which is substantially flat and at a vertical angle. The wall 21 is obtained here by means of a continuous belt 24, mounted at the edges of the first and second rollers 22, 23 in such a way that it circumscribes them. The endless belt 24 may be corrugated or may have projections on its edges, extending towards the seafood 31, so as to increase the contact friction with the seafood 31.

Facing the blade 5 and on the opposite side of the skinning roller 3, the skinner 1 may also have an angled side 37, designed to protect the blade 5 for accident-prevention purposes and to help confine the seafood 31 feed path on the side opposite that where the pusher 10 operates.

In another embodiment of the invention, illustrated in Figure 8, this confinement may be achieved - as an alternative to or without the presence of the side 37 - using another contact roller 27, at the side of the seafood, on the side opposite that occupied by the blade 5 and motor-driven so that it rotates in the same direction as the skinning roller 3, in such a way that it returns to the skinning roller 3 any seafood 31 which accidentally came into contact with the side contact roller 27.

In practice, the seafood 31 is fed to the skinner 1 automatically by means of a continuous conveyor, through a seafood 31 infeed section 25 confined to a narrow zone, located close to one end of the skinning roller 3. The infeed section 25 has a feed section 26 which is above and vertically aligned with the skinning roller 3, so as to allow the seafood 31 to be fed by dropping it directly onto the side surface of the skinning roller 3.

The invention described can be subject to modifications and variations without thereby departing from the scope of the inventive concept. Moreover, all the details of the invention may be substituted by technically equivalent elements.

## Claims

1. An automatic skinner for smooth-skinned seafood (31) comprising a structural frame (2) which supports a skinning roller (3) which rotates about a longitudinal axis (4), designed to receive the seafood (31) to be skinned on its side edge surface, and a blade (5) angled with a cutting edge (6) towards the skinning roller (3) to make contact with the seafood (31) supported so as to remove the skin; the structural frame (2) being attached to feed means (7) which feed the seafood (31) longitudinally to the skinning roller (3), and to actuator means (8) which move the seafood transversally to the skinning roller (3) as it is fed along the skinning roller (3); the skinner (1) being **characterised in that** the skinning roller (3) and feed means (7) are integrated with one another; and **in that** the structural frame (2) is designed to set the skinning roller (3) at various angles, constraining the longitudinal axis (4) to constantly remain in a predetermined vertical plane (9) which does not vary with the various skinner (1) configurations used.

2. The skinner according to claim 1, **characterised in that** the feed means comprise spiral projections (7) on the side surface of the skinning roller (3).

3. The skinner according to any of the foregoing claims, **characterised in that** the actuator means (8) comprise a seafood (31) pusher (10) which is mobile, with alternating straight motion, along a trajectory transversal to the skinning roller (3).

4. The skinner according to claim 3, **characterised in that** the actuator means (8) comprise a shoe (11) supporting the pusher (10), mounted along at least one straight guide (12), transversal to the axis (4) of the skinning roller (3); at least one motor-driven connecting rod and crank (14, 15) mechanism (13), attached to the shoe (11), giving the pusher (10) a motor-driven motion.

5. The skinner according to claim 4, **characterised in that** it comprises two connecting rod and crank (14, 15) mechanisms (13), being attached to a shared shoe (11) as a single unit.

6. The skinner according to claim 4 or 5, **characterised in that** the pusher (10) is supported by the shoe (11) in such a way that it is offset towards the skinning roller (3).

7. The skinner according to claim 6, **characterised in that** it comprises means (16) for adjusting the height setting of the pusher (10) relative to the skinning roller (3).

8. The skinner according to claim 7, **characterised in that** the pusher (10) is supported by a casing (17) attached to the guide or guides (12) and rotating about an axis of rotation (18) parallel to the axis (4) of rotation of the skinning roller (3), the adjusting means (16) being located between the casing (17) and the shoe (11).

9. The skinner according to claim 8, **characterised in that** the adjusting means include at least one screw and nut mechanism (19, 20) between the casing (17) and the guide (12).

10. The skinner according to any of the foregoing claims from 4 to 9, **characterised in that** the pusher (10) comprises a wall (21) with which the side of the seafood (31) makes contact.

11. The skinner according to any of the foregoing claims from 4 to 10, **characterised in that** the pusher (10) comprises at least a first roller (22) parallel to the skinning roller (3), being motor-driven in such a way that it rotates about its axis of rotation.

12. The skinner according to claim 10, **characterised in that** the pusher (10) comprises at least a second roller (23) parallel to and attached to the first roller (22).

13. The skinner according to claim 11 or 12, **characterised in that** each roller (22, 23) has projections extending from its edge towards the seafood.

14. The skinner according to claim 12, **characterised in that** it comprises a continuous belt (24), mounted in such a way that it circumscribes the edge of the first and second rollers (22, 23).

15. The skinner according to claim 14, **characterised in that** the continuous belt (24) has projections extending from its edges towards the seafood (31).

16. The skinner according to any of the foregoing claims, **characterised in that** it comprises a seafood infeed section (25) having a feed section (26) above and vertically aligned with the skinning roller (3), designed to allow seafood to be fed by dropping it directly onto the side surface of the skinning roller (3).

17. The skinner according to any of the previous claims, **characterised in that** it comprises a seafood side contact roller (27), angled parallel to the skinning roller (3), facing the blade (5) and on the opposite side of the skinning roller (3) to that occupied by the blade (5); the contact roller (27) being motor-driven so that it rotates in such a way as to return any seafood (31) which makes contact with the side contact roller (27) to the skinning roller (3).

## Patentansprüche

1. Automatische Enthäutungsmaschine für glatthäutige Fische (31), enthaltend einen Strukturrahmen (2), der eine Enthäutungsrolle (3) trägt, welche sich um eine Längsachse (4) dreht und dazu bestimmt ist, den zu enthäutenden Fisch (31) auf ihrer Seitenkantenoberfläche aufzunehmen, und ein Messer (5), angewinkelt mit einer Schneidkante (6) in Richtung der Enthäutungsrolle (3), um mit dem Fisch (31) in Kontakt zu kommen, so gehalten, dass die H aut entfernt w ird; w obei der S trukturrahmen (2) an Zuführmittel (7) angeschlossen ist, welche die Fische (31) längs zu der Enthäutungsrolle (3) zuführen, sowie an Antriebsmittel (8), welche die Fische quer zu der Enthäutungsrolle (3) bewegen, während sie entlang der Enthäutungsrolle (3) vorlaufen; wobei die Enthäutungsmaschine (1) **dadurch gekennzeichnet ist, dass** die Enthäutungsrolle (3) und die Zuführmittel (7) miteinander integriert sind; und dadurch, dass der Strukturrahmen (2) dazu bestimmt ist, die Enthäutungsrolle (3) in verschiedenen Winkeln auszurichten, wobei die Längsachse (4) ständig auf einer vorgegebenen vertikalen Ebene (9) bleibt, die sich auch mit den verschiedenen benutzten Konfigurationen der Enthäutungsmaschine (1) nicht verändert.

2. Enthäutungsmaschine nach Patentanspruch 1, **dadurch gekennzeichnet, dass** die Zuführmittel an der seitlichen Oberfläche der Enthäutungsrolle (3) schneckenförmige Vorsprünge (7) enthalten.

3. Enthäutungsmaschine nach einem beliebigen der vorstehenden Patentansprüche, **dadurch gekennzeichnet, dass** die Antriebsmittel (8) einen Schieber (10) für die Fische (31) enthalten, welcher mit einer geradlinigen wechselweisen Bewegung entlang einer quer zu der Enthäutungsrolle (3) verlaufenden Bahn beweglich ist.

4. Enthäutungsmaschine nach Patentanspruch 3, **dadurch gekennzeichnet, dass** die Antriebsmittel (8) einen den Schieber (10) tragenden Gleitkörper (11) enthalten, montiert entlang von wenigstens einer geradlinigen Führung (12) quer zu der Achse (4) der Enthäutungsrolle (3); wobei wenigstens ein dem Gleitkörper (11) zugeordneter motorgetriebener Mechanismus (13) aus Verbindungsstange und Kurbel (14, 15) dem Schieber (10) eine angetriebene Bewegung verleiht.

5. Enthäutungsmaschine nach Patentanspruch 4, **dadurch gekennzeichnet, dass** sie zwei Mechanismen (13) aus Verbindungsstange und Kurbel (14, 15) enthält, die einem gemeinsamen Gleitkörper (11) als eine einzige Einheit zugeordnet sind.

6. Enthäutungsmaschine nach Patentanspruch 4 oder 5, **dadurch gekennzeichnet, dass** der Schieber (10) von dem Gleitkörper (11) auf solche Weise getragen wird, dass er zu den Enthäutungsrolle (3) hin versetzt ist.

7. Enthäutungsmaschine nach Patentanspruch 6, **dadurch gekennzeichnet, dass** sie Mittel (16) zum Einstellen der Höhe des Schiebers (10) im Verhältnis zu der Enthäutungsrolle (3) enthält.

8. Enthäutungsmaschine nach Patentanspruch 7, **dadurch gekennzeichnet, dass** der Schieber (10) durch ein Gehäuse (17) getragen wird, angeschlossen an die Führung oder die Führungen (12) und drehbar um eine Drehachse (18) parallel zu der Drehachse (4) der Enthäutungsrolle (3), wobei die Einstellmittel (16) zwischen dem Gehäuse (17) und dem Gleitkörper (11) angeordnet sind.

9. Enthäutungsmaschine nach Patentanspruch 8, **dadurch gekennzeichnet, dass** die Einstellmittel wenigstens einen Schrauben-Mutter-Mechanismus (19, 20) zwischen dem Gehäuse (17) und der Führung (12) enthalten.

10. Enthäutungsmaschine nach einem beliebigen der vorstehenden Patentansprüche von 4 bis 9, **dadurch gekennzeichnet, dass** der Schieber (10) eine Wand (21) enthält, welche mit der Seite der Fische (31) in Kontakt kommt.

11. Enthäutungsmaschine nach einem beliebigen der vorstehenden Patentansprüche von 4 bis 10, **dadurch gekennzeichnet, dass** der Schieber (10) wenigstens eine erste Rolle (22) parallel zu der Enthäutungsrolle (3) enthält, wobei diese auf solche Weise angetrieben ist, dass sie sich um ihre Drehachse dreht.

12. Enthäutungsmaschine nach Patentanspruch 10, **dadurch gekennzeichnet, dass** der Schieber (10) wenigstens eine zweite Rolle (23) parallel zu der genannten ersten Rolle (22) und an diese angeschlossen enthält.

13. Enthäutungsmaschine nach Patentanspruch 11 oder 12, **dadurch gekennzeichnet, dass** jede Rolle (22, 23) Vorsprünge aufweist, die sich von ihrer Kante in Richtung der Fische erstrecken.

14. Enthäutungsmaschine nach Patentanspruch 12, **dadurch gekennzeichnet, dass** sie ein kontinuierliches Band (24) enthält, montiert auf solche Weise, dass es die Kanten der ersten und zweiten Rollen (22, 23) umgibt.

15. Enthäutungsmaschine nach Patentanspruch 14, **dadurch gekennzeichnet, dass** das kontinuierliche Band (24) Vorsprünge aufweist, die sich von seinen Kanten aus in Richtung der Fische (31) erstrecken.

16. Enthäutungsmaschine nach einem beliebigen der vorstehenden Patentansprüche, **dadurch gekennzeichnet, dass** sie einen Fischzuführteil (25) enthält, der mit einem Zuführabschnitt (26) oberhalb und vertikal ausgerichtet zu der Enthäutungsrolle (3) versehen ist, dazu bestimmt, das Zuführen der Fische direkt durch Fallen auf die seitliche Oberfläche der Enthäutungsrolle (3) zu erlauben.

17. Enthäutungsmaschine nach einem beliebigen der vorstehenden Patentansprüche, **dadurch gekennzeichnet, dass** sie eine seitliche Anschlagrolle (27) für die Fische enthält, angewinkelt parallel zu der Enthäutungsrolle (3), dem Messer (5) gegenüberliegend und auf der entgegengesetzten Seite der Enthäutungsrolle (3) von der, die von dem Messer (5) belegt ist; wobei die Kontaktrolle (27) angetrieben ist, so dass sie sich auf solche Weise dreht, dass sie alle Fische (31), welche mit der seitlichen Kontaktrolle (27) in Berührung kommen, zu der Enthäutungsrolle (3) zurückführt.

## Revendications

1. Machine automatique à dépouiller les poissons à peau tendre (31) comprenant un châssis structurel (2) supportant un rouleau de dépouillage (3) qui pivote autour d'un axe longitudinal (4) destiné à recevoir les poissons (31) à dépouiller sur sa surface de contour latérale, et une lame (5) orientée avec un bord de coupe (6) vers le rouleau de dépouillage (3) pour entrer en contact avec les poissons (31) supportés de manière à ôter la peau; le châssis structurel (2) étant associé à des moyens d'alimentation (7) qui avancent les poissons (31) longitudinalement vers le rouleau de dépouillage (3), et à des moyens d'actionnement (8) qui meuvent les poissons transversalement au rouleau de dépouillage (3) alors qu'ils sont alimentés le long du rouleau de dépouillage (3); la machine à dépouiller (1) étant **caractérisée en ce que** le rouleau de dépouillage (3) et les moyens d'alimentation (7) sont intégrés l'un avec l'autre; et **en ce que** le châssis structurel (2) est conçu pour orienter le rouleau de dépouillage (3) selon de différents angles, contraignant l'axe longitudinal (4) à rester constamment dans un plan vertical (9) prédéterminé qui ne varie pas avec les différentes configurations de la machine à dépouiller (1) utilisées.

2. Machine à dépouiller selon la revendication 1, **caractérisée en ce que** les moyens d'alimentation comprennent des saillies hélicoïdales (7) sur la surface latérale du rouleau de dépouillage (3).

3. Machine à dépouiller selon l'une quelconque des revendications précédentes, **caractérisée en ce que** les moyens d'actionnement (8) comprennent un poussoir (10) des poissons (31) mobile, avec un mouvement rectiligne alternatif, le long d'une trajectoire transversale au rouleau de dépouillage (3).

4. Machine à dépouiller selon la revendication 3, **caractérisée en ce que** les moyens d'actionnement (8) comprennent un patin (11) de support du poussoir (10), monté le long d'au moins un guide rectiligne (12), transversal à l'axe (4) du rouleau de dépouillage (3); au moins un mécanisme (13) bielle-manivelle (14, 15) motorisé, associé au patin (11), procurant un mouvement motorisé au poussoir (10).

5. Machine à dépouiller selon la revendication 4, **caractérisée en ce qu'**elle comprend deux mécanismes (13) bielle-manivelle (14, 15), fixés de manière unitaire à un patin (11) commun.

6. Machine à dépouiller selon la revendication 4 ou 5, **caractérisée en ce que** le poussoir (10) est supporté par le patin (11) de manière à être décalé vers le rouleau de dépouillage (3).

7. Machine à dépouiller selon la revendication 6, **caractérisée en ce qu'**elle comprend des moyens (16) pour régler la hauteur du poussoir (10) par rapport au rouleau de dépouillage (3).

8. Machine à dépouiller selon la revendication 7, **caractérisée en ce que** le poussoir (10) est supporté par une carcasse (17) fixée au guide ou aux guides (12) et pivotant autour d'un axe de rotation (18) parallèle à l'axe (4) de rotation du rouleau de dépouillage (3), les moyens de réglage (16) étant disposés entre la carcasse (17) et le patin (11).

9. Machine à dépouiller selon la revendication 8, **caractérisée en ce que** les moyens de réglage comprennent au moins une vis et un mécanisme à vis-écrou (19, 20) entre la carcasse (17) et le guide (12).

10. Machine à dépouiller selon une quelconque des revendications précédentes 4 à 9, **caractérisée en ce que** le poussoir (10) comprend une paroi (21) avec laquelle le côté du poisson (31) entre en contact.

11. Machine à dépouiller selon une quelconque des revendications précédentes 4 à 10, **caractérisée en ce que** le poussoir (10) comprend au moins un premier rouleau (22) parallèle au rouleau de dépouillage (3), motorisé de manière à ce qu'il pivote autour de son axe de rotation.

12. Machine à dépouiller selon la revendication 10, **caractérisée en ce que** le poussoir (10) comprend au moins un second rouleau (23) parallèle et associé au premier rouleau (22).

13. Machine à dépouiller selon la revendication 11 ou 12, **caractérisée en ce que** chaque rouleau (22, 23) présente des saillies s'étendant de son bord vers les poissons.

14. Machine à dépouiller selon la revendication 12, **caractérisée en ce qu'**elle comprend une courroie sans fin (24), monté de manière à circonscrire le bord des premiers e seconds rouleaux (22, 23).

15. Machine à dépouiller selon la revendication 14, **caractérisée en ce que** la courroie sans fin (24) présente des saillies s'étendant de ses bords vers les poissons (31).

16. Machine à dépouiller selon une quelconque des revendications précédentes, **caractérisée en ce qu'**elle comprend une section d'introduction (25) des poissons ayant une section d'alimentation (26) superposée et verticalement alignée avec le rouleau de dépouillage (3), conçu pour permettre l'alimentation des poissons en les laissant tomber directement sur la surface latérale du rouleau de dépouillage (3).

17. Machine à dépouiller selon une quelconque des revendications précédentes, **caractérisée en ce qu'**elle comprend un rouleau (27) de contact latéral des poissons, orienté parallèlement au rouleau de dépouillage (3), faisant face à la lame (5) et étant disposé sur le côté opposé du rouleau de dépouillage (3) à celui occupé par la lame (5); le rouleau de contact (27) étant motorisé pour pivoter de manière à renvoyer sur le rouleau de dépouillage (3) les poissons (31) entrés en contact avec le même rouleau de contact latéral (27).
